# EUROPEAN PATENT SPECIFICATION

(11) **EP 3 467 483 B1**
(45) Date of publication and mention of the grant of the patent: **20.09.2023**
(21) Application number: 17807037.1
(22) Date of filing: 01.06.2017
(51) Int. Cl.: G01B 9/02, G01N 21/88, G01N 21/956, G01N 21/47, G02B 26/12, G02B 27/48, G01N 21/95

(54) **PATTERN STRUCTURE INSPECTION DEVICE AND INSPECTION METHOD**
MUSTERSTRUKTURINSPEKTIONSVORRICHTUNG UND INSPEKTIONSVERFAHREN
DISPOSITIF D'INSPECTION DE STRUCTURE DE MOTIF ET PROCÉDÉ D'INSPECTION

(30) Priority: 02.06.2016 KR 20160068563; 29.05.2017 KR 20170066365
(43) Date of publication of application: 10.04.2019
(73) Proprietor: The Wave Talk, Inc., Daejeon 34051 (KR); Korea Advanced Institute of Science and Technology, Daejeon 34141 (KR)
(72) Inventor: KIM, Young Dug, Seongnam-si Gyeonggi-do 13597 (KR); PARK,Yongkeun, Daejeon 34200 (KR); PARK, Jong Chan, Chungcheongbuk-do 28415 (KR)
(74) Representative: Marks & Clerk LLP
(86) International application number: PCT/KR2017/005747
(87) International publication number: WO 2017/209544

(56) References cited:
- JP-A- H09 133 621
- JP-A- 2003 139 515
- JP-A- 2003 139 515
- JP-A- 2004 101 189
- JP-A- 2004 101 189
- KR-A- 20030 075 968
- KR-A- 20110 110 578
- US-A- 6 064 517
- US-A- 6 137 570
- US-A1- 2011 240 863
- US-A1- 2013 182 263
- US-A1- 2015 116 717
- US-B1- 9 194 811

## Description

### TECHNICAL FIELD

The present invention relates to an inspection apparatus, as defined in claim 1, for inspecting a structure having a two-dimensional (2D) or three-dimensional (3D) pattern (hereinafter referred to a 'pattern structure'), by using a chaotic wave sensor.

### BACKGROUND ART

A technology for generating a pattern region in which a structure having a certain pattern is provided on a substrate is broadly used in the industrial fields. A representative example thereof includes a technology for generating a minute pattern by selectively removing a metal or insulator coated on a substrate to a certain thickness, as in a semiconductor device, a display device, a microelectromechanical system (MEMS) device, or the like.

After a pattern is generated using the above technology, in some cases, inspection may be performed to determine whether the pattern is normally generated. To this end, a method of observing a top layer of the pattern by using an optical microscope or a method of detecting a defect on the surface of the pattern by using a probe has been generally used.

When a plurality of patterns are sequentially stacked on a substrate in a direction perpendicular to the substrate, a defect of lower patterns of a top-layer pattern may not be easily detected using the general inspection method. In particular, when the patterns are made of an optically opaque material, e.g., a metal, a top-layer metal pattern conceals lower patterns and thus optical observation of a defect of the lower patterns is not possible.

For example, in a semiconductor device manufacturing process, semiconductor devices such as memory devices and logic devices are generally manufactured by sequentially stacking layers having certain patterns, on a silicon wafer.

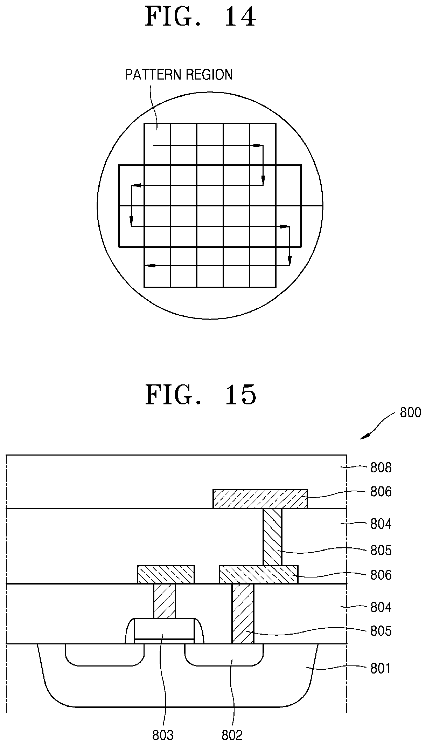

FIG. 15 is a cross-sectional view of an example of a metal-oxide-semiconductor field-effect transistor (MOSFET) device. Referring to FIG. 15, active regions 801 and 802 doped with a dopant are generated in the surface of a silicon wafer, and a gate 803 of a MOS transistor is generated on the active regions 801 and 802. Various levels of metal wiring layers 805 and 806 for electrical conductivity and insulating layers 804 for electrical insulation are generated on the gate 803. Lastly, a passivation layer 808 for protecting the generated structures from an external environment is coated. As described above, in general, a semiconductor device has a structure in which elements from active regions to a passivation layer are sequentially stacked on one another.

In such a vertical stack structure, after a final process is completed, a defect of lower structures under a top layer may not be easily detected in a non-destructive manner.

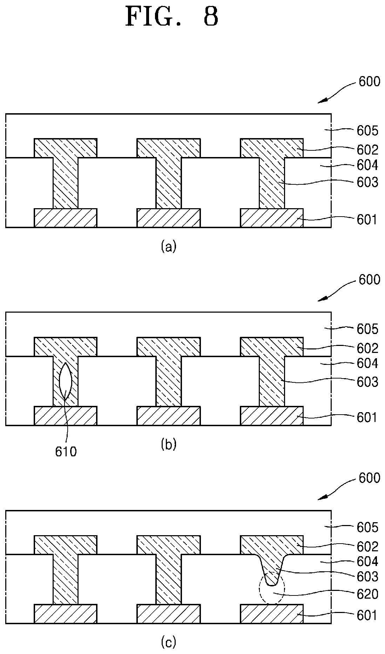

FIGS. 8A to 8C are cross-sectional views of examples of multi-layer metallization structures. In FIGS. 8A to 8C, reference numeral 601 refers to first metal wires of a lower layer, reference numeral 602 refers to second metal wires of an upper layer, and an insulating layer 604 is generated between the first and second metal wires 601 and 602 extending in directions perpendicular to each other and vertically stacked on one another.

As illustrated in FIG. 8A, the first metal wires 601 are electrically conducted with the second metal wires 602 through a metal 603 filled in vias penetrating through the insulating layer 604. FIG. 8A corresponds to a case when the vias are normally buried. However, in some cases, due to an abnormal process, a via may not be normally buried and may have a void 610 therein as illustrated in FIG. 8B. Alternatively, an abnormal pattern 620 in which a via does not completely penetrate through the insulating layer 604 may occur as illustrated in FIG. 8C.

To determine whether a via has a void or whether a via is normally formed, an electrical test needs to be performed on a device after a manufacturing process is completed. To detect such a defect during the process, a wafer needs to be cut and a corresponding region needs to be observed using inspection equipment such as a transmission electron microscope (TEM) or a scanning electron microscope (SEM). Although observation of a local region is required to check an error of the process, a whole wafer needs to be destructed and thus quite much time and cost are required. In addition, the process is delayed by a time taken to check the process.

The above problems may commonly occur not only in semiconductor devices but also in various other devices manufactured by sequentially stacking multiple pattern layers.

Background art includes US6137570, US2013182263, and US9194811.

US6137570 describes a method and apparatus for using far field scattered and diffracted light to determine whether a collection of topological features on a surface (e.g., a semiconductor wafer) conforms to an expected condition or quality. This determination is made by comparing the far field diffraction pattern of a surface under consideration with a corresponding diffraction pattern (a "baseline"). If the baseline diffraction pattern and far field diffraction pattern varies by more than a prescribed amount or in characteristic ways, it is inferred that the surface features are defective. The method may be implemented as a die-to-die comparison of far field diffraction patterns of two dies on a semiconductor wafer. The portion of the far field scattered and diffracted light sensitive to a relevant condition or quality can also be reimaged to obtain an improved signal-to-noise ratio.

US2013182263 describes systems and methods to enhance and isolate residual signals indicative of the speckle field based on measurements taken by optically based metrology systems. Structural irregularities such as roughness and topographical errors give rise to light scattered outside of the specularly reflected component of the diffracted light. The scattered light interferes constructively or destructively with the specular component in a high numerical aperture illumination and detection system to form a speckle field. Various methods of determining residual signals indicative of the speckle field are presented. Furthermore, various methods of determining structural irregularities based on analysis of the residual signals are presented. In various embodiments, illumination with a high degree of spatial coherence is provided over any of a wide range of angles of incidence, multiple polarization channels, and multiple wavelength channels. In addition, diffracted light is collected over a wide range of angles of detection.

US9194811 describes methods and apparatus for detecting defects in a semiconductor sample. The system includes an illumination optics module for simultaneously scanning two or more structured illumination patterns across the sample in a scan direction. The structured illumination patterns have a phase shift with respect to each other, and the structured illumination patterns are parallel to the scan direction. The system also includes a collection optics module for collecting output light from the sample in response to the structured illumination patterns that are scanned across the sample and two or more detectors for individually detecting the output light collected for individual ones of the structured illumination patterns. The system includes a controller to generate two or more structured illumination images for the structured illumination patterns based on the individually detected output light and detect defects on the sample by performing a comparison type inspection process based on the two or more structured illumination images.

### DETAILED DESCRIPTION OF THE INVENTION

### TECHNICAL PROBLEM

The present invention provides an inspection apparatus, as defined in claim 1, capable of non-destructively detecting not only a defect of a pattern in a top layer of a multilayer pattern region on a substrate but also a defect of patterns thereunder. However, the scope of the present invention is not limited thereto.

### TECHNICAL SOLUTION

According to the present invention, there is provided a pattern structure inspection apparatus as recited in claim 1.

The collecting of the speckle data may be performed in an area between the sample and the data collector or in an internal area of the data collector.

The collecting of the speckle data may be performed in an area between a first surface including a first point spaced apart from a surface of the sample by a first distance, and a second surface including a second point spaced apart from the surface of the sample by a second distance greater than the first distance.

A pattern structure inspection method may further include generating a three-dimensional (3D) speckle image by using a plurality of speckle signals detected by a plurality of data collectors, when the data collector includes the plurality of data collectors.

The collecting of the speckle data further includes amplifying a number of times that the wave is multiple-scattered in the sample, by reflecting at least some waves multiple-scattered and emitted from the sample, back to the sample.

The wave irradiated from the wave source may include a laser beam.

The sample may have a structure in which a plurality of patterns are sequentially stacked on a substrate in a direction perpendicular to the substrate.

The structure of the sample may include a pattern region made of metal and a pattern region made of an insulator.

The data collector may collect the speckle data in an area between the sample and the data collector or in an internal area of the data collector.

The data collector may collect the speckle data in a first area spaced apart from a surface of the sample by a certain distance.

The first area may be located between a first surface including a first point spaced apart from the surface of the sample by a first distance, and a second surface including a second point spaced apart from the surface of the sample by a second distance greater than the first distance.

The first area may be located between a first surface including a first point spaced apart from the surface of the sample by a first distance, and a second surface including a second point spaced apart from the surface of the sample by a second distance greater than the first distance.

The pattern structure inspection apparatus may further include a three-dimensional (3D) image generator for generating a 3D speckle image by using a plurality of speckle signals detected by a plurality of data collectors, when the data collector includes the plurality of data collectors, and the controller analyzes characteristics of the sample by using the 3D speckle image.

The pattern structure inspection apparatus may further include a multi-beam reflector for splitting the wave incident from the wave source, and providing the split waves along a plurality of paths, and a beam splitter located on the plurality of paths of the waves provided by the multi-beam reflector, to change paths of waves reflected and emitted from the sample and the reference sample, and provide the waves to the data collector.

### ADVANTAGEOUS EFFECTS

As described above, according to an embodiment of the present invention, a defect of a multi-layer pattern structure on a substrate may be rapidly detected in a non-destructive manner. According to an embodiment of the present invention, not only a defect of a pattern in a top layer of the pattern structure but also a defect of patterns thereunder may be rapidly detected. However, the scope of the present invention is not limited to the above effects.

### DESCRIPTION OF THE DRAWINGS

FIGS. 1A and 1B are cross-sectional views for describing an operating principle of a chaotic wave sensor according to an embodiment of the present invention.
FIG. 2 is a conceptual view of a pattern structure inspection apparatus according to an example outside the claimed invention.
FIG. 3 is a cross-sectional view for describing a laser speckle detection method of a data collector of FIG. 1.
FIGS. 4A to 4C are conceptual views of implemental examples of the pattern structure inspection apparatus of FIG. 1.
FIGS. 5A and 5B are conceptual views of a pattern structure inspection apparatus according to an embodiment of the present invention.
FIGS. 6 and 7 are conceptual views of pattern structure inspection apparatuses according to examples useful for understanding the present invention.
FIGS. 8A to 8C are cross-sectional views of semiconductor devices having multi-layer metallization structures.
FIGS. 9A and 9B are plan views of metallization structures of semiconductor devices.
FIGS. 10A to 10C are plan and cross-sectional views of semiconductor devices designed to simulate laser speckle analysis, and FIGS. 11A and 11B are graphs showing the simulation results of laser speckle analysis.
FIGS. 12A to 12C are plan and cross-sectional views of other semiconductor devices designed to simulate laser speckle analysis, and FIGS. 11A and 11B are graphs showing the simulation results of laser speckle analysis.
FIG. 14 is a plan view of an example of a silicon wafer including a plurality of pattern regions thereon.
FIG. 15 is a cross-sectional view of a general metal-oxide-semiconductor field-effect transistor (MOSFET) device.

### BEST MODE

Hereinafter, the present invention will be described in detail by explaining embodiments of the invention and examples useful for understanding the invention with reference to the attached drawings. The invention may, however, be embodied in many different forms and should not be construed as being limited to the embodiments set forth herein; rather, these embodiments are provided so that this disclosure will be thorough and complete, and will fully convey the concept of the invention to one of ordinary skill in the art. In the drawings, the sizes of elements may be exaggerated or reduced for convenience of explanation. For the avoidance of doubt, the scope of the invention is defined by the appended claims.

When a beam is irradiated onto a material having a uniform refractive index, e.g., glass, the beam is refracted to a certain direction. However, when a coherent beam such as a laser beam is irradiated onto a material having a non-uniform refractive index, the beam is very complicatedly multiple-scattered in the material.

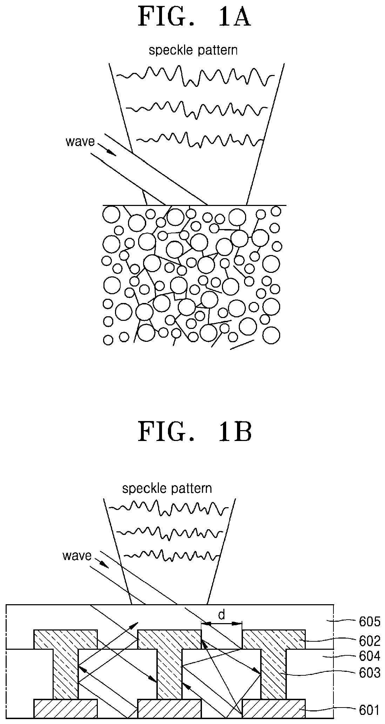

Referring to FIG. 1A, a beam or wave (hereinafter representatively referred to as the wave) irradiated from a wave source is multiple-scattered along complicated paths and some of the waves pass through an inspection target surface. Constructive or destructive interference occurs between the waves passing through multiple points of the inspection target surface and thus grain-shaped speckles are generated.

The waves scattered along the complicated paths are called "chaotic waves" in this specification, and the chaotic waves may be detected using laser speckles. When coherent light (e.g., a laser beam) is irradiated onto a stable medium, a material of which does not move as time passes, as shown in FIG. 1A, a stable speckle pattern may be observed. In this specification, an apparatus for measuring a speckle pattern is defined as a chaotic wave sensor.

According to an embodiment of the present invention, a chaotic wave sensor for irradiating a wave of a certain wavelength from a wave source to a sample such as a pattern structure (i.e., a structure in which a pattern region is provided on at least a part of a substrate), and analyzing speckles generated from the sample. The chaotic wave sensor is an apparatus for detecting a defect of a partial region of the pattern structure and thus may be called a pattern structure inspection apparatus.

FIG. 1B shows an example of a speckle pattern in a case when a semiconductor device having a multi-layer metallization structure is used as a sample. In general, a pattern structure of the semiconductor device includes a plurality of materials having different optical characteristics, e.g., different refractive indices or transmittances. For example, referring to FIG. 1B, metals (e.g., 601, 602, and 603) are opaque electrical conductors and thus do not transmit visible light whereas electrical insulators (e.g., 604 and 605) are made of silicon oxide or silicon nitride and have high transmittances in a visible light range.

A first insulating layer 604 is provided between first metal wires 601 and second metal wires 602, and a second insulating layer 605 is provided on the second metal wires 602.

A representative material of the first and second insulating layers 604 and 605 may include silicon oxide (SiO₂) but any other transparent insulating material capable of transmitting light may also be used. Examples of a material of the first and second metal wires 601 and 602 may include aluminum (Al), tungsten (W), and copper (Cu).

Referring to FIG. 1B, spaces d are generated due to patterning of the second metal wires 602 in a top layer of the semiconductor device, and the second insulating layer 605 for insulation is filled in the spaces d. For example, a laser beam irradiated onto the surface of the sample enters or passes through the spaces d between the second metal wires 602 and then is multiple-scattered. For example, the laser beam is reflected on the surface of a metal 603 filled in vias or on the surfaces of the first metal wires 601 connected to the metal 603 from below, is scattered back to the second metal wires 602, and exits the sample. In this procedure, laser speckles are generated due to constructive/destructive interference of waves. Therefore, a pattern of the laser speckles may be determined based on a structure of the sample (e.g., metal wires, vias, and insulating layers), and a variation in the structure may lead to a variation in the pattern of the laser speckles.

In a pattern structure inspection apparatus according to an embodiment of the present invention, any type of source device capable of generating a wave may be used as a wave source. For example, a laser capable of irradiating a wave of a certain wavelength band may be used. The present invention is not limited by the type of the wave source. However, for convenience of explanation, the following description assumes that a laser is used as a wave source (or light source). The pattern structure inspection apparatus according to an embodiment of the present invention uses a laser as a light source and thus may be called a laser inspection apparatus.

The pattern structure inspection apparatus according to an embodiment of the present invention includes a light source for irradiating a laser beam, a sample holder supporting a sample, a data collector for collecting data about laser speckles generated due to multiple scattering of the laser beam irradiated onto the sample, and a data analyzer for analyzing the collected data and outputting the analysis result on a display to a user. The data analyzer may include a controller and the display. The controller analyzes the collected data and transmits the analysis result to the display. The display outputs the received analysis result to outside.

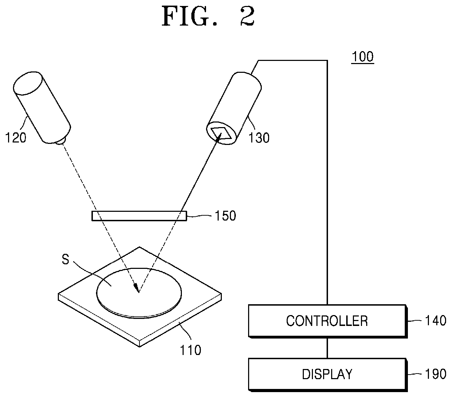

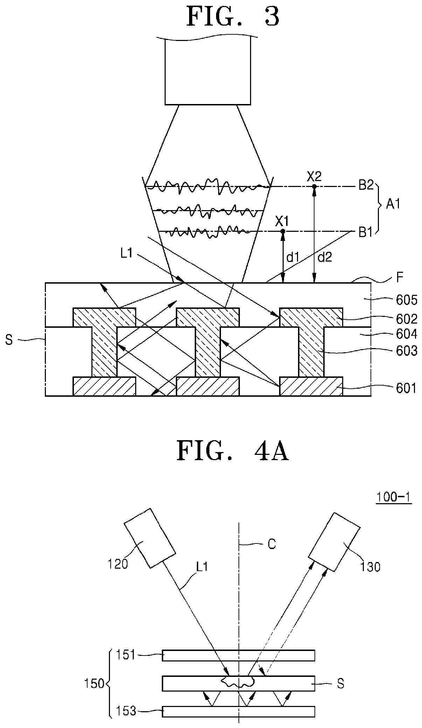

FIG. 2 is a conceptual view of a pattern structure inspection apparatus 100 according to an example which however does not comprise all the features of the claimed invention, and FIG. 3 is a cross-sectional view for describing a laser speckle detection method of a data collector 130 of FIG. 1. FIGS. 4A to 4C are conceptual views of implemental examples of the pattern structure inspection apparatus 100.

Referring to FIG. 2, the pattern structure inspection apparatus 100 includes a light source 120 and the data collector 130. The pattern structure inspection apparatus 100 further includes a multiple scattering amplifier 150 and a controller 140, and may include a sample holder 110 and a display 190.

The light source 120 may irradiate a wave toward a sample S in the sample holder 110. For example, a laser wave having good coherence may be used to generate speckles on the sample holder 110. In this case, when a spectral bandwidth of the laser wave, which determines coherence of the laser wave, is short, accuracy of measurement may be high. That is, the accuracy of measurement may increase in proportion to a coherence length. As such, the light source 120 may irradiate a laser wave having a spectral bandwidth less than a predefined reference bandwidth. When the spectral bandwidth is much less than the reference bandwidth, the accuracy of measurement may greatly increase. For example, the spectral bandwidth of the laser wave may be set to be equal to or less than 1 nm.

The data collector 130 may include a sensing means corresponding to the type of the light source 120. For example, when a light source for irradiating visible light is used, an image capturing apparatus such as a camera or an image sensor may be included.

A camera capable of measuring two-dimensional (2D) data is preferable but a camera capable of measuring one-dimensional (1D) data may also be used. For example, to measure a laser speckle signal provided from the sample S, the camera may face and be tilted by a certain angle from a light-incident surface of the sample S.

According to an embodiment, the data collector 130 may include an image sensor and one or more lenses having a certain focal length, to detect laser speckles. In this case, the focal length may be less than the distance between the sample S and the data collector 130 but is not limited thereto. According to another embodiment, an image sensor having no lenses may be used as the data collector 130.

Referring to FIG. 3, the data collector 130 may detect laser speckles generated due to multiple scattering of the wave irradiated onto the sample S. In other words, the data collector 130 may detect laser speckles caused from the sample S.

Specifically, the data collector 130 may detect the laser speckles on a surface F of the sample S, or may detect the laser speckles at every preset timing in a first area A1 on a path of the waves multiple-scattered by the sample S. In this case, the first area A1 may be an area spaced apart from the surface F of the sample S by a certain distance. According to an embodiment, the first area A1 may be an area provided between a first surface B1 including a first point x1 spaced apart from the surface F of the sample S by a first distance d1 and a second surface B2 including a second point x2 spaced apart from the surface F of the sample S by a second distance d2 greater than the first distance d1. That is, the laser speckles may be detected in the first area A1 between the data collector 130 and the sample S. Otherwise, the laser speckles may be detected in an internal area of the data collector 130, for example, on the surface of a CCD sensor when the data collector 130 includes the CCD sensor.

According to another embodiment, the data collector 130 may detect the laser speckles by using an image sensor. Compared to a case when the laser speckles are observed on the surface F of the sample S, when the laser speckles are detected using the image sensor, the focal length for detecting the laser speckles may be reduced.

When the image sensor is used as the data collector 130, the image sensor may be located in such a manner that a size d of pixels is less than or equal to a grain size of a speckle pattern.

Referring to FIGS. 4A to 4C, the pattern structure inspection apparatus 100 according the present invention further includes the multiple scattering amplifier 150. The multiple scattering amplifier 150 may amplify the number of times that the wave is multiple-scattered in the sample S, by reflecting at least some waves multiple-scattered and emitted from the sample S, back to the sample S.

The multiple scattering amplifier 150 may include a multiple scattering material. For example, the multiple scattering material may include particles having a large refractive index and having a diameter of a micrometer or smaller unit, e.g., titanium oxide (TiO₂) nanoparticles, and the multiple scattering amplifier 150 may reflect at least some waves incident on the multiple scattering amplifier 150.

The multiple scattering amplifier 150 may be located adjacent to the sample S in such a manner that the waves multiple-scattered and emitted from the sample S travel back and forth between the sample S and the multiple scattering amplifier 150 by at least once.

The pattern structure inspection apparatus 100 according to an embodiment of the present invention may increase sensitivity of detecting a minute abnormal region included in the sample S, by amplifying the number of times that the wave is multiple-scattered in the sample S, by using the multiple scattering amplifier 150.

The multiple scattering amplifier 150 may reflect some of incident waves and transmit the other. The multiple scattering amplifier 150 may transmit some of incident waves and reflect the other. Otherwise, the multiple scattering amplifier 150 may reflect all of incident waves. At least one multiple scattering amplifier 150 may be selected to correspond to an optical system structure of the light source 120 and the data collector 130.

Referring to FIG. 4A, in a pattern structure inspection apparatus 100-1, an optical system including the light source 120 and the data collector 130 may be configured as a reflective optical system. A wave L1 incident on the sample S may be multiple-scattered due to non-uniform optical characteristics of the sample S and some waves may be reflected out. In this case, the data collector 130 may measure laser speckles caused by the sample S, by capturing an image of a laser speckle signal of the waves reflected and emitted from the sample S due to the non-uniform optical characteristics of the sample S.

The pattern structure inspection apparatus 100-1 includes according to the invention a first multiple scattering amplifier 151 and a second multiple scattering amplifier 153. The first multiple scattering amplifier 151 being located on an extension line C passing through the center of the sample S, and reflecting at least some waves multiple-scattered and emitted from the sample S, back to the sample S.

The second multiple scattering amplifier 153 being located at an opposite side of the first multiple scattering amplifier 151 with respect to the sample S, and reflecting at least some waves multiple-scattered and emitted from the sample S, back to the sample S. In the reflective optical system, the first multiple scattering amplifier 151 may be configured as a transflective multiple scattering amplifier for transmitting some of incident waves and reflecting the other.

The second multiple scattering amplifier 153 may be configured as a reflective multiple scattering amplifier for reflecting all of incident waves. As such, the number of times that the wave is multiple-scattered in the sample S may be remarkably amplified.

In FIG. 4A, a wavelength, an amplitude, etc. of the wave irradiated from the light source 120 may not be particularly limited. As the data collector 130, a camera capable of measuring 2D data is preferable but a camera capable of measuring 1D data may also be used.

In FIG. 4A, the light source 120 and the sample S are not limited any particular locations. The data collector 130 for measuring the reflected laser speckle signal may be located in such a manner that the size of a measured speckle corresponds to two or three pixels of the data collector 130. For example, to measure the laser speckle signal of the waves reflected from the sample S, the data collector 130 may be tilted by a certain angle from a light-incident surface of the sample S.

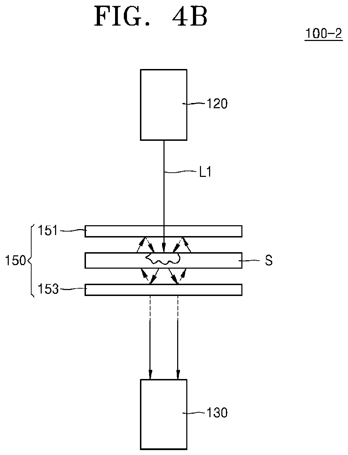

Referring to FIG. 4B, in a pattern structure inspection apparatus 100-2, an optical system including the light source 120 and the data collector 130 may be configured as a transmissive optical system. A wave L1 incident on the sample S may be multiple-scattered due to non-uniform optical characteristics of the sample S and some waves may be transmitted through and emitted from the sample S.

Then, the data collector 130 may measure laser speckles caused by the sample S, by capturing an image of a laser speckle signal of the waves transmitted through and emitted from the sample S.

When the pattern structure inspection apparatus 100-2 has a transmissive optical system, each of the first and second multiple scattering amplifiers 151 and 153 may be configured as a transflective multiple scattering amplifier for transmitting some of incident waves and reflecting the other.

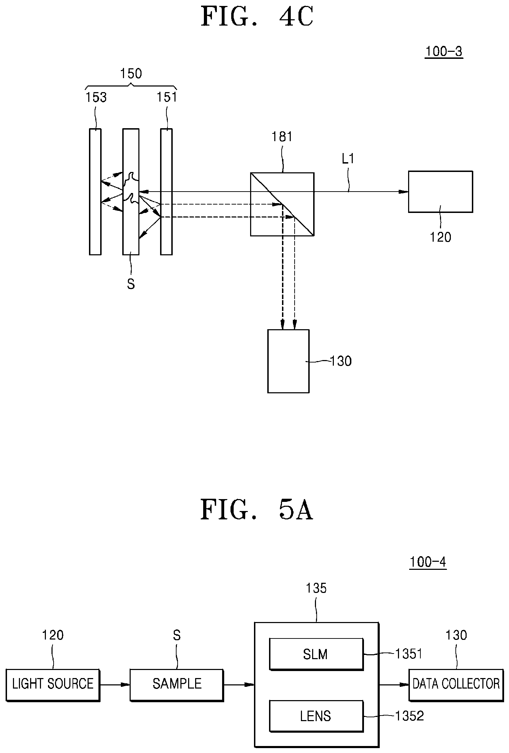

Referring to FIG. 4C, in a pattern structure inspection apparatus 100-3, an optical system including the light source 120 and the data collector 130 may be configured as a spectral optical system. A wave L1 incident on the sample S may be multiple-scattered due to non-uniform optical characteristics of the sample S and some waves may be reflected out. In this case, a beam splitter 181 may be used to change a path of the waves toward the data collector 130.

The spectral optical system uses polarization of the waves and thus may further include an optical unit such as a phase retarder or a polarizer. In this case, the data collector 130 may be located between the light source 120 and the sample S and may change the path of the waves reflected and emitted from the sample S. In addition, the data collector 130 may measure laser speckles of the waves which are path-changed after being reflected from the sample S.

When the pattern structure inspection apparatus 100-3 has a spectral optical system, the first multiple scattering amplifier 151 may be configured as a transflective multiple scattering amplifier for transmitting some of incident waves and reflecting the other. The second multiple scattering amplifier 153 may be configured as a reflective multiple scattering amplifier for reflecting all of incident waves.

The pattern structure inspection apparatus 100 may further include the controller 140 and the display 190.

The controller 140 analyzes the speckle data collected by the data collector 130, and transmits the analysis result to the display 190. For example, the controller 140 may analyze the shape of the laser speckles and determine whether the shape of the pattern structure of the sample equals a preset designed shape.

The display 190 may display the analysis result of the controller 140 to be viewed to a user.

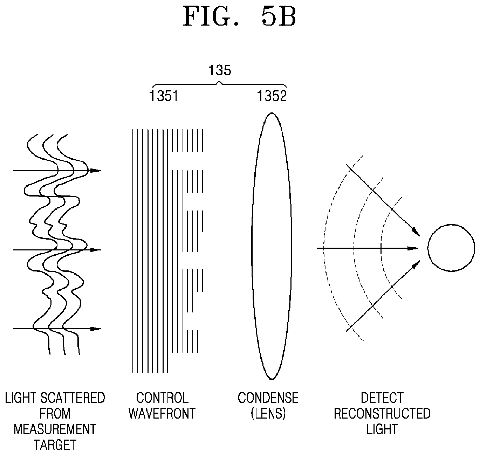

FIGS. 5A and 5B are conceptual views of a pattern structure inspection apparatus 100-4 according to another embodiment of the present invention. For convenience of explanation, FIGS. 5A and 5B are focused on the relationship between an optical unit 135 and the data collector 130.

Referring to FIGS. 5A and 5B, the pattern structure inspection apparatus 100-4 may further include the optical unit 135 for reconstructing and modulating a first wave signal scattered from a sample, into a second wave signal corresponding to a wave irradiated from the light source 120 and not yet scattered by the sample. In this case, the optical unit 135 may include a spatial light modulator (SLM) 1351 and a data collector 130. When waves scattered from a measurement target are incident, the optical unit 135 may reconstruct a not-scattered wave (or beam) by controlling wavefronts of the scattered waves, and provide the reconstructed wave to the data collector 130. The waves (or beams) scattered from the sample may be incident on the SLM 1351. The SLM 1351 may control wavefronts of the waves scattered from the sample and provide the controlled waves to the lens 1352. The lens 1352 may condense the controlled waves and provide the condensed wave to the data collector 130. The data collector 130 may detect the wave condensed by the lens 1352 and reconstruct and output the condensed wave into and as the not-scattered wave initially output from the light source 120.

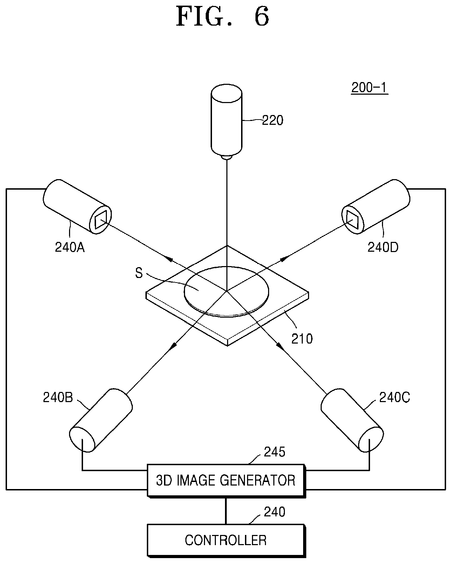

FIG. 6 is a conceptual view of a pattern structure inspection apparatus 200-1 according to an example useful for understanding, but not an embodiment of, the present invention. In the example of FIG. 6, the pattern structure inspection apparatus 200-1 may include two or more data collectors (e.g., 230A, 230B, 230C, and 230D). In this case, the pattern structure inspection apparatus 200-1 may further include a three-dimensional (3D) image generator 245 for generating a 3D speckle image by using a plurality of laser speckle signals detected by a plurality of data collectors 230A, 230B, 230C, and 230D. The number of data collectors 230 theoretically required to generate a 3D image is two. However, since a relative image is generated using two data collectors 230, at least three data collectors 230 may be used to generate an absolute 3D image. To increase accuracy, four data collectors 230A, 230B, 230C, and 230D are illustrated in FIG. 6.

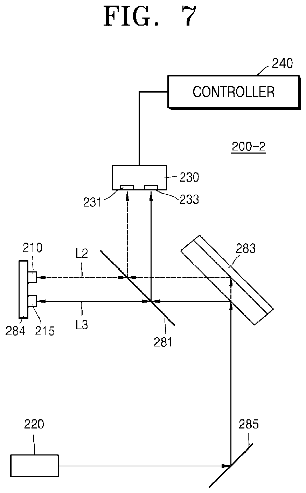

FIG. 7 is a conceptual view of a pattern structure inspection apparatus 200-2 according to a further example useful for understanding, but not an embodiment of, the present invention.

Referring to FIG. 7, the pattern structure inspection apparatus 200-2 may include a sample holder 210, a reference sample holder 215, a light source 220, a data collector 230, a controller 240, a beam splitter 281, and a multi-beam reflector 283. Except that the reference sample holder 215 is further included and thus waves are provided in different paths, elements according to the current embodiment are the same as those according to the afore-described embodiments and thus repeated descriptions thereof will not be provided herein. The reference sample holder 215 may be located adjacent to the sample holder 210 and may accommodate a reference sample.

For example, the reference sample may be a reference semiconductor device verified as being normally manufactured, and a sample may be a semiconductor device to be inspected to determine whether a process is normally performed.

The light source 220 may irradiate a laser wave toward the sample in the sample holder 210 and the reference sample in the reference sample holder 215. Herein, the multi-beam reflector 283 and the beam splitter 281 may be located between the light source 220 and the sample and reference sample holders 210 and 215. The pattern structure inspection apparatus 200-2 may further include a mirror 285 for changing a path of the wave provided from the light source 220.

The multi-beam reflector 283 may split the wave incident from the light source 220, and provide the split waves along a plurality of paths. The multi-beam reflector 283 may reflect the wave separately on front and rear reflection surfaces thereof, and provide a first wave L2 and a second wave L3, which are split from the incident wave and are parallel to each other.

The beam splitter 281 may be located on the plurality of paths of the waves provided by the multi-beam reflector 283, and may provide the first and second waves L2 and L3 respectively to the sample and the reference sample. Thereafter, the beam splitter 281 may change paths of waves reflected and emitted from the sample and the reference sample, and provide the waves to the data collector 230.

The data collector 230 may detect first laser speckles and second laser speckles respectively generated due to multiple scattering of the waves from the sample and the reference sample. The data collector 230 may include a first data collector 231 located to correspond to a path of the first waves L2 reflected from the sample and a second data collector 233 located to correspond to a path of the second waves L3 reflected from the reference sample.

The controller 240 compares the first laser speckle data to the second laser speckle data and determines whether a difference value between the first laser speckle data and the second laser speckle data is equal to or less than a preset reference value. When the difference value between the first laser speckle data and the second laser speckle data is equal to or less than the reference value, a pattern structure of the semiconductor device serving as the sample may be determined as being normal like that of the reference semiconductor device. Otherwise, the pattern structure of the semiconductor device serving as the sample may be determined as having an abnormal region and thus it may be regarded that an error has occurred in a manufacturing process.

FIGS. 8A to 8C are cross-sectional views of semiconductor devices having multi-layer metallization structures as examples of a sample. A speckle pattern analysis method using a variation in a sample structure will now be described with reference to FIGS. 8A to 8C.

FIG. 8A shows a case when a process is normally performed, FIG. 8B shows a case when a via has a void 610, and FIG. 8C shows a case when a contact penetrating through an insulating layer 604 is not completely generated.

The sample is mounted in a sample holder, a laser beam is irradiated onto the sample, and laser speckle data scattered from the sample is collected. The collected data is analyzed by a data analyzer. The data analyzer includes a controller and a display.

The controller of the data analyzer is connected to a database (DB) storing laser speckle data of a reference sample, i.e., FIG. 8A. The controller compares the collected laser speckle data to the laser speckle data of the reference sample, which is pre-stored in the DB, and calculates a difference value between speckle patterns thereof. When the difference value is equal to or less than a preset reference value, it may be determined that the analyzed sample has the same structure as the reference sample and thus a process is normally performed.

Otherwise, when a process is abnormally performed and thus a pattern has a defect as illustrated in FIG. 8B or 8C, the difference value between the collected speckle data and the speckle data of the reference sample will be large and will exceed the preset reference value. Therefore, it may be determined that the process is abnormally performed.

The determination result of the controller is transmitted to a display and is output to be viewed to a user.

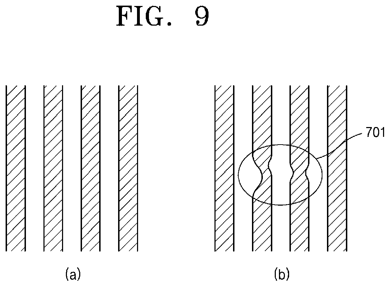

As another example, FIGS. 9A and 9B illustrate a laser speckle analysis method for detecting a variation in a line width of metal wires. When a sample has a normal line width of metal wires as illustrated in FIG. 9A, a difference value between the sample and a reference sample will be equal to or less than a preset reference value. However, when the sample has an abnormal line width region 701 as illustrated in FIG. 9B, the difference value between the sample and the reference sample will be remarkable. Therefore, it may be determined that a process is abnormally performed.

Simulation may be performed to check laser speckle results of different pattern structures like those illustrated in FIGS. 9A and 9B.

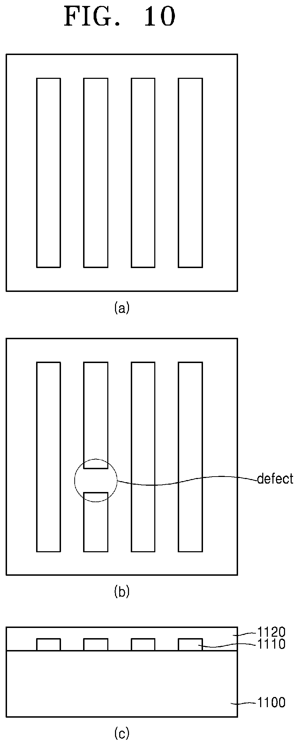

FIGS. 10A to 10C are plan and cross-sectional views of semiconductor devices designed for simulation. FIG. 10C illustrates a cross-section of the semiconductor device designed for simulation. Referring to FIG. 10C, a substrate 1100 is provided as a monocrystalline silicon substrate, and metal wires 1110 made of aluminum and spaced apart from each other by a certain distance are generated on the substrate 1100. A silicon oxide layer 1120 is coated on the metal wires 1110. In FIGS. 10A to 10C, a grid spacing is 100 nm and a laser beam irradiated from a light source has a wavelength of 532 nm.

FIG. 10A shows a case when the metal wires are normally generated, and FIG. 10B shows a case when a defect occurs in one of the metal wires.

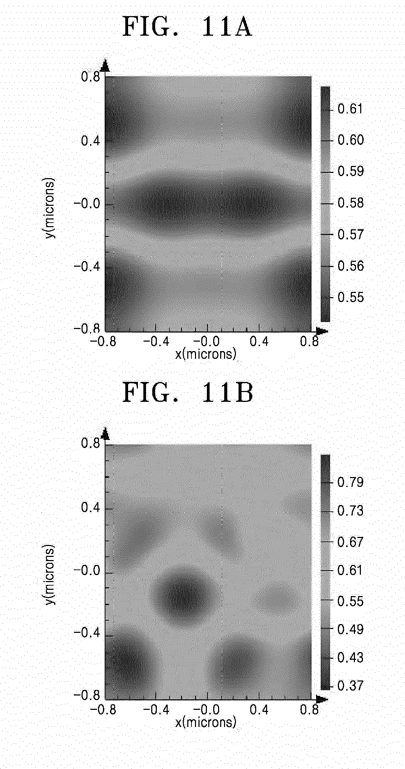

FIGS. 11A and 11B are graphs showing the simulation results. FIG. 11A shows a laser speckle result of the structure illustrated in FIG. 10A, and FIG. 11B shows a laser speckle result of the structure illustrated in FIG. 10B.

As shown in FIGS. 11A and 11B, the laser speckle result in a case when the metal wires are abnormally generated (FIG. 11B) remarkably differs from the laser speckle result in a case when the metal wires are normally generated (FIG. 11A). It may be determined whether a metal wire patterning process has an error, by comparing the results of FIGS. 11A and 11B.

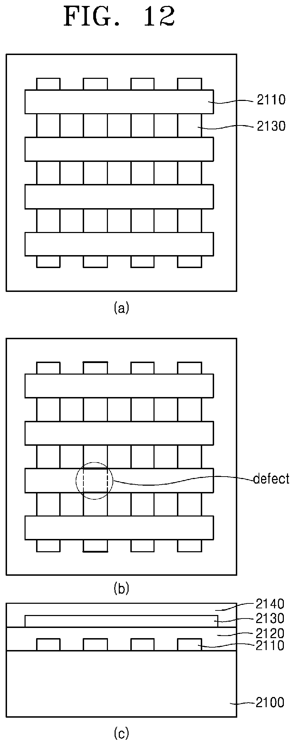

FIGS. 12A to 12C are plan and cross-sectional views of other semiconductor devices designed for simulation. FIG. 12C illustrates a cross-section of the semiconductor device designed for simulation. Referring to FIG. 12C, a substrate 2100 is provided as a monocrystalline silicon substrate, and first metal wires 2110 made of aluminum and spaced apart from each other by a certain distance are generated on the substrate 2100. A silicon oxide layer serving as a first insulating layer 2120 is coated on the first metal wires 2110. Second metal wires 2130 extending in a direction perpendicular to the first metal wires 2110 are generated on the first insulating layer 2120 and then a silicon oxide layer serving as a second insulating layer 2140 is coated on the second metal wires 2130. The first and second metal wires 2110 and 2130 are both made of aluminum.

FIG. 12A shows a case when both of the first and second metal wires 2110 and 2130 are normally generated, and FIG. 12B shows a case when a defect occurs in one of the first metal wires 2110. In FIG. 12B, since the second metal wires 2130 are normally patterned, the defect of the first metal wires 2110 is blocked by the second metal wires 2130 and thus is not observed on the plan view. In FIGS. 12A to 12C, a grid spacing is 100 nm and a laser beam irradiated from a light source has a wavelength of 532 nm.

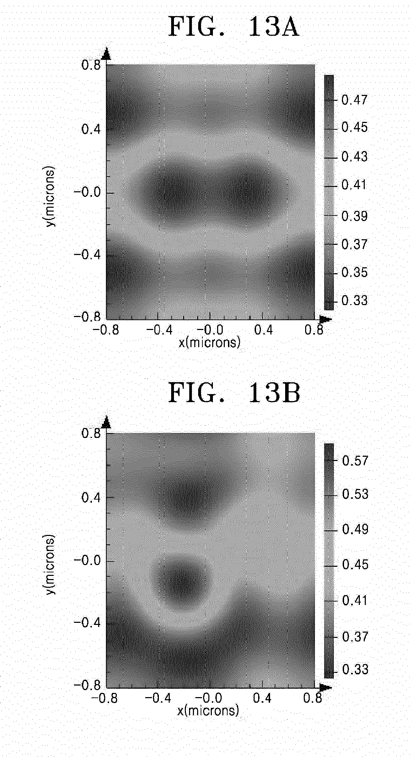

FIGS. 13A and 13B are graphs showing the simulation results. FIG. 13A shows a laser speckle result of the structure illustrated in FIG. 12A, and FIG. 13B shows a laser speckle result of the structure illustrated in FIG. 12B.

As shown in FIGS. 13A and 13B, the laser speckle result in a case when the metal wires are abnormally generated (FIG. 13B) remarkably differs from the laser speckle result in a case when the metal wires are normally generated (FIG. 13A). It may be determined whether a metal wire patterning process has an error, by comparing the results of FIGS. 13A and 13B.

Particularly, in FIG. 13B, since the metal wires in a top layer are opaque in a visible light range, an abnormal pattern region (i.e., a defect) thereunder may not be easily observed using a general inspection method. However, according to the present invention, when an abnormal speckle pattern is detected, it may be regarded that an abnormal pattern region is present under the top metal wires.

As another example, a defect of an active region generated by injecting ions into a silicon substrate may also be detected in the same manner.

Another laser inspection apparatus according to an embodiment of the present invention may perform an inspection function on each of a plurality of pattern regions periodically repeated on a substrate of a device. Representatively, for example, the laser inspection apparatus may sequentially inspect a plurality of pattern regions on a silicon wafer to detect whether a pattern structure of each pattern region within the silicon wafer has a defect.

FIG. 14 is a plan view of an example of a plurality of pattern regions on a silicon wafer. In this case, the pattern regions are regions to be ultimately sawed from the silicon wafer into individual devices.

Using a pattern structure inspection apparatus according to an embodiment of the present invention, a laser beam is irradiated onto the plurality of pattern regions in a sequential manner, e.g., in order of arrows of FIG. 14, from a top left pattern region, and a data collector collects laser speckle data from each pattern region and stores the laser speckle data in a DB.

A data analyzer analyzes the laser speckle data of the pattern regions, which is stored in the DB, and sets a criterion for determining a defect of each pattern region. For example, the intensity or shape of a laser speckle pattern may serve as a characteristic for setting the criterion. After the characteristic for setting the criterion is determined, statistical analysis, e.g., calculation of an average and a standard deviation, is performed on all the pattern regions. The calculated average and standard deviation are set as the criterion.

For example, when laser speckle data collected from a pattern region remarkably differs from the average, the pattern region may be determined as having a different structure from the other pattern regions and may be regarded as a region on which a process is abnormally performed. Therefore, by outputting information about the abnormal pattern region, a user may obtain the information about the abnormal pattern region without cutting the silicon wafer and inspecting each sample.

While the present invention has been particularly shown and described with reference to embodiments thereof, it will be understood by one of ordinary skill in the art that various changes in form and details may be made therein without departing from the scope of the present invention as defined by the following claims.

### INDUSTRIAL APPLICABILITY

According to an embodiment of the present invention, a defect of a multi-layer pattern structure on a substrate may be rapidly detected in a non-destructive manner. According to an embodiment of the present invention, not only a defect of a pattern in a top layer of the pattern structure but also a defect of patterns thereunder may be rapidly detected. As such, time efficiency may be increased. In addition, inspection costs may be reduced based on various inspection methods.

## Claims

1. A pattern structure inspection apparatus (100; 200) comprising:
a wave source for irradiating a wave (L1) onto a sample (S) comprising a pattern region in which a structure having a certain pattern is provided on a substrate;
a data collector (130) configured to collect speckle data generated due to multiple scattering of the irradiated wave (L1) by the sample (S);
a data analyzer configured to receive and analyze the speckle data collected by the data collector, and configured to output an analysis result on a display (190); and
a multiple scattering amplifier (150) for amplifying a number of times that the wave (L1) is multiple-scattered in the sample (S), by reflecting at least some waves multiple-scattered and emitted from the sample (S), back to the sample (S),
wherein the data collector (130) collects the speckle data in an area between the sample (S) and the data collector (130) or in an internal area of the data collector (130), wherein the multiple scattering amplifier (150) comprises:
a first multiple scattering amplifier (151) located on an extension line (C) passing through a center of the sample (S), to reflect at least some waves multiple-scattered and emitted from the sample S, back to the sample (S);
the pattern structure inspection apparatus being **characterized by**
a second multiple scattering amplifier (153) located at an opposite side of the first multiple scattering amplifier (151) with respect to the sample (S), to reflect at least some waves multiple-scattered and emitted from the sample (S), back to the sample (S).

2. The pattern structure inspection apparatus (100; 200) of claim 1, wherein the data collector (130) is configured to collect the speckle data in a first area (A1) spaced apart from a surface (F) of the sample (S) by a certain distance.

3. The pattern structure inspection apparatus (100; 200) of claim 2, wherein the first area (A1) is located between a first surface (B1) comprising a first point (x1) spaced apart from the surface (F) of the sample (S) by a first distance (d1), and a second surface (B2) comprising a second point (x2) spaced apart from the surface (F) of the sample (S) by a second distance (d2) greater than the first distance (d1).

4. The pattern structure inspection apparatus (100; 200) of claim 1, further comprising a three-dimensional image generator (245) for generating a three-dimensional speckle image by using a plurality of speckle signals detected by a plurality of data collectors (230A), when the data collector (130) comprises the plurality of data collectors (130),
wherein the controller (140) is configured to analyze characteristics of the sample (S) by using the three-dimensional speckle image.

## Patentansprüche

1. Vorrichtung (100; 200) zur Inspektion einer Musterstruktur, Folgendes umfassend:
eine Wellenquelle zum Ausstrahlen einer Welle (L1) auf eine Probe (S), die einen Musterbereich umfasst, in dem eine Struktur mit einem bestimmten Muster auf einem Substrat bereitgestellt ist,
einen Datensammler (130), der so konfiguriert ist, dass er Speckle-Daten sammelt, die durch Mehrfachstreuung der bestrahlten Welle (L1) durch die Probe (S) erzeugt werden,
einen Datenanalysator, der so konfiguriert ist, dass er die vom Datensammler gesammelten Speckle-Daten empfängt und analysiert, und der so konfiguriert ist, dass er ein Analyseergebnis auf einer Anzeige (190) ausgibt; und
einen Mehrfachstreuungsverstärker (150) zum mehrfachen Verstärken, dass die Welle (L1) in der Probe (S) mehrfach gestreut wird, indem mindestens einige von der Probe (S) mehrfach gestreute und emittierte Wellen zurück zur Probe (S) reflektiert werden,
wobei der Datensammler (130) die Speckle-Daten in einem Bereich zwischen der Probe (S) und dem Datensammler (130) oder in einem internen Bereich des Datensammlers (130) sammelt, wobei der Mehrfachstreuungsverstärker (150) Folgendes umfasst:
einen ersten Mehrfachstreuungsverstärker (151), der sich auf einer Verlängerungslinie (C) befindet, die durch eine Mitte der Probe (S) verläuft, um mindestens einige von der Probe (S) mehrfach gestreute und emittierte Wellen zurück zur Probe (S) zu reflektieren;
wobei die Vorrichtung zur Inspektion einer Musterstruktur **gekennzeichnet ist durch**
einen zweiten Mehrfachstreuungsverstärker (153), der sich an einer dem ersten Mehrfachstreuungsverstärker (151) gegenüberliegenden Seite in Bezug auf die Probe (S) befindet, um mindestens einige von der Probe (S) mehrfach gestreute und emittierte Wellen zurück zur Probe (S) zu reflektieren.

2. Vorrichtung (100; 200) zur Inspektion einer Musterstruktur nach Anspruch 1, wobei der Datensammler (130) so konfiguriert ist, dass er die Speckle-Daten in einem ersten Bereich (A1) sammelt, der von einer Oberfläche (F) der Probe (S) um einen bestimmten Abstand beabstandet ist.

3. Vorrichtung (100; 200) zur Inspektion einer Musterstruktur nach Anspruch 2,
wobei sich der erste Bereich (A1) zwischen einer ersten Oberfläche (B1), die einen ersten Punkt (x1) umfasst, der von der Oberfläche (F) der Probe (S) um einen ersten Abstand (d1) beabstandet ist, und einer zweiten Oberfläche (B2) befindet, die einen zweiten Punkt (x2) umfasst, der von der Oberfläche (F) der Probe (S) um einen zweiten Abstand (d2) beabstandet ist, der größer als der erste Abstand (d1) ist.

4. Vorrichtung (100; 200) zur Inspektion einer Musterstruktur nach Anspruch 1, ferner umfassend einen dreidimensionalen Bildgenerator (245) zum Erzeugen eines dreidimensionalen Speckle-Bildes unter Verwendung einer Vielzahl von Speckle-Signalen, die von einer Vielzahl von Datensammlern (230A) erfasst werden, wenn der Datensammler (130) die Vielzahl von Datensammlern (130) umfasst,
wobei die Steuerung (140) so konfiguriert ist, dass sie die Eigenschaften der Probe (S) unter Verwendung des dreidimensionalen Speckle-Bildes analysiert.

## Revendications

1. Appareil d'inspection de structure de motif (100 ; 200) comprenant :
une source d'onde pour irradier une onde (L1) sur un échantillon (S) comprenant une région de motif dans laquelle une structure ayant un certain motif est fournie sur un substrat ;
un collecteur de données (130) configuré pour collecter des données de granularité générées par une diffusion multiple de l'onde irradiée (L1) par l'échantillon (S) ;
un analyseur de données configuré pour recevoir et analyser les données de granularité collectées par le collecteur de données, et configuré pour émettre en sortie un résultat d'analyse sur un affichage (190) ; et
un amplificateur de diffusion multiple (150) pour amplifier un certain nombre de fois que l'onde (L1) est diffusée de façon multiple dans l'échantillon (S), en réfléchissant au moins certaines ondes diffusées de façon multiple et émises par l'échantillon (S), en retour vers l'échantillon (S),
dans lequel le collecteur de données (130) collecte les données de granularité dans une zone entre l'échantillon (S) et le collecteur de données (130) ou dans une zone interne du collecteur de données (130), dans lequel l'amplificateur de diffusion multiple (150) comprend :
un premier amplificateur de diffusion multiple (151) situé sur une ligne d'extension (C) passant à travers un centre de l'échantillon (S), pour réfléchir au moins certaines ondes diffusées de façon multiple et émises par l'échantillon (S), en retour vers l'échantillon (S) ;
l'appareil d'inspection de structure de motif étant **caractérisé par**
un deuxième amplificateur de diffusion multiple (153) situé à un côté opposé du premier amplificateur de diffusion multiple (151) par rapport à l'échantillon (S), pour réfléchir au moins certaines ondes diffusées de façon multiple et émises par l'échantillon (S), en retour vers l'échantillon (S).

2. Appareil d'inspection de structure de motif (100 ; 200) selon la revendication 1, dans lequel le collecteur de données (130) est configuré pour collecter les données de granularité dans une première zone (A1) espacée d'une surface (F) de l'échantillon (S) d'une certaine distance.

3. Appareil d'inspection de structure de motif (100 ; 200) selon la revendication 2,
dans lequel la première zone (A1) est située entre une première surface (B1) comprenant un premier point (x1) espacé de la surface (F) de l'échantillon (S) d'une première distance (d1), et une deuxième surface (B2) comprenant un deuxième point (x2) espacé de la surface (F) de l'échantillon (S) d'une deuxième distance (d2) supérieure à la première distance (d1).

4. Appareil d'inspection de structure de motif (100; 200) selon la revendication 1, comprenant en outre un générateur d'image à trois dimensions (245) pour générer une image de granularité à trois dimensions en utilisant une pluralité de signaux de granularité détectés par une pluralité de collecteurs de données (230A), lorsque le collecteur de données (130) comprend la pluralité des collecteurs de données (130),
dans lequel le dispositif de commande (140) est configuré pour analyser des caractéristiques de l'échantillon (S) en utilisant l'image de granularité à trois dimensions.
